# FASCICULE DE BREVET EUROPEEN

(11) **EP 2 715 429 B1**
(45) Date de publication et mention de la délivrance du brevet: **18.08.2021**
(21) Numéro de dépôt: 12731044.9
(22) Date de dépôt: 23.05.2012
(51) Int. Cl.: G02B 21/02, G02B 21/00, G01N 21/63

(54) **IMAGERIE BIOMEDICALE PERFECTIONNEE A EXCITATION MULTI PHOTONIQUE**
VERBESSERTE BIOMEDIZINISCHE BILDGEBUNG MIT MULTIPHOTONENANREGUNG
IMPROVED BIOMEDICAL IMAGING WITH MULTIPHOTON EXCITATION

(30) Priorité: 25.05.2011 FR 1154545
(43) Date de publication de la demande: 09.04.2014
(73) Titulaire: Université de Lorraine, 54000 Nancy (FR); Centre National de la Recherche Scientifique, 75794 Paris Cedex 16 (FR)
(72) Inventeur: DUMAS, Dominique, 54000 Nancy (FR); HUPONT, Sébastien, 54136 Bouxieres Aux Dames (FR)
(74) Mandataire: Rhein, Alain
(86) Numéro de dépôt international: PCT/FR2012/051156
(87) Numéro de publication internationale: WO 2012/160312

(56) Documents cités:
- EP-A1- 2 146 234
- EP-A1- 2 290 423
- DE-A1-102004 034 992
- DE-A1-102007 048 089

## Description

La présente invention se situe dans le domaine de l'imagerie biomédicale.

Elle concerne plus particulièrement une installation optique permettant d'obtenir des performances améliorées dans le domaine de l'imagerie biomédicale.

L'imagerie biomédicale est une technique permettant d'observer des surfaces du corps ou d'organes, ainsi que des éléments légèrement sous la surface de la peau ou des organes. Les développements récents tendent à rendre accessibles à l'observation des zones plus profondes, pour assister le médecin dans sa recherche et son observation en vue d'établir un diagnostic.

Différentes solutions ont été proposées pour améliorer les images biomédicales. Ainsi, la microscopie confocale à balayage laser, qui permet de limiter la détection des signaux à ceux émanant du plan focal à l'exclusion des autres signaux, ce qui permet d'augmenter la résolution (de l'ordre de 300 nm latéralement - xy - et 400 nm spatialement - yz).

La microscopie multi photonique permet de concentrer l'excitation en un point très précis, et d'augmenter l'énergie en sommant l'énergie d'au moins deux photons, et donc d'accéder à des profondeurs plus importantes du fait de l'irradiation dans l'infra-rouge (> 700nm typiquement) sur les tissus vivants. Elle nécessite l'utilisation de lasers impulsionnels de fréquence variable (80 MHz par exemple) capables d'émettre un train d'impulsions de photons avec des périodes de l'ordre de 10 à 13 ns. On parle de laser femto seconde, car la largeur à mi-hauteur des impulsions est de l'ordre d'une centaine de femtosecondes (1 fs = 10⁻¹⁵ secondes). Il s'agit d'un régime sub-picoseconde.

La microscopie SHG, pour « Second Harmonie Génération », génération de second harmonique, terme généralement utilisé dans le présent document pour le second, mais aussi pour les multiples harmoniques, utilise le phénomène d'émission de multiples harmoniques (Second, Tierce, ...) sans nécessairement ajouter des agents de contraste, et permet d'obtenir de très bons résultats en microscopie.

Ces solutions de l'état de la technique (visible ou infra-rouge) permettent d'obtenir des images de bonne qualité, mais nécessitent le prélèvement d'un échantillon pour le disposer sur le microscope au contact direct de celui-ci.

Or en imagerie biomédicale, il est souvent souhaitable de pouvoir observer une partie d'un corps ou organe directement en place (in situ). Cela est possible avec des macroscopes, permettant d'observer à une distance de travail supérieure au centimètre, une zone par exemple de peau d'une dimension de quelques millimètres. Mais ces macroscopes ne permettent pas d'accéder à une résolution microscopique, comme le permettent les microscopes. A l'opposé, les microscopes permettent d'atteindre la résolution souhaitée, mais nécessitent une distance de travail souvent inférieure au millimètre (170 µm pour une observation sous lamelle), et au maximum de 2 ou 3 millimètres, et ne permettent d'observer en une seule fois que des zones de dimension bien inférieure au millimètre (champs d'observation de l'ordre de 50 à 500 µm).

Plusieurs documents, comme le document US20040263959, décrivent une solution de type microscope, couplée à un déplacement de l'échantillon, permettant ainsi par une pluralité de vues reconstituées en mosaïque, de couvrir un échantillon de taille macroscopique.

Le document US2004004194 propose une idée permettant de réaliser une observation macroscopique d'un échantillon, puis de sélectionner une zone précise à partir de l'image macroscopique, de changer de composants optiques, et d'effectuer une observation microscopique de la zone sélectionnée. Néanmoins, il reste nécessaire d'avoir un contact avec l'échantillon dans la phase de l'observation microscopique, et de plus, le document se contente de présenter des idées, omettant de donner des solutions.

Le document DE 10 2004 034992 divulgue un microscope con-focal intégrant un zoom optique en vue de compenser les variations de la focale due à l'objectif du microscope. Ce document ne divulgue aucune solution permettant l'observation en profondeur d'un échantillon, et les dispositifs tels qu'ils sont divulgués dans ce document ne conviennent pas à une telle observation en profondeur.

Le document DE 10 2007 048 089 divulgue une installation de microscopie avec un scanner, une source laser et un zoom, pour permettre l'observation macroscopique et microscopique d'un échantillon sans changer d'objectif. Néanmoins ce dispositif ne permet pas d'observation en profondeur d'un échantillon, ce qui limite très nettement son intérêt dans le domaine de l'imagerie médicale. Le document D4 EP 2 146 234 A1 divulgue une installation d'imagerie biomédicale apte à mettre en œuvre une excitation multi photonique d'un échantillon comprenant des chromophores intrinsèques sensibles à l'excitation par des photons d'excitation ayant une énergie choisie pour produire des photons d'émission, comprenant en outre des moyens de mise au point comportant un système optique sous la forme d'un macro zoom à grandissement variable.

Il existe donc un besoin non couvert par l'état de la technique, d'une solution permettant une observation d'un échantillon macroscopique avec une distance de travail de type macroscopique tout en obtenant une résolution propre de type microscopique, et avec une profondeur d'observation compatible avec les besoins de l'imagerie médicale.

La présente invention se propose de remédier à au moins une partie des inconvénients précités et propose une solution qui permette une observation d'un échantillon macroscopique, par exemple d'une dimension supérieure à 5 mm, avec une distance de travail de type macroscopique, par exemple supérieure à 1 cm, tout en obtenant une résolution de type microscopique, de l'ordre du demi-micron ou en-dessous, et des profondeurs d'observation compatibles avec les besoins de l'imagerie médicale.

A cet effet, l'invention concerne une installation d'imagerie biomédicale selon la revendication 1.

Cette installation est particulière en ce que lesdits moyens de mise au point comportent un système optique sous la forme d'un macrozoom à grandissement variable couplé à un objectif situé entre ledit moyen de balayage et ledit échantillon. Ledit système optique comprend un mécanisme de déplacement suivant l'axe optique d'un ensemble de lentilles configuré pour permettre un grandissement variable dudit système optique d'un facteur de zoom au moins égal à 2 et configuré pour réaliser un grandissement dudit système optique allant jusqu'à au moins 300.

Lesdits moyens pour diriger les photons d'émission vers au moins une zone de collecte sont configurés pour diriger lesdits photons d'émission vers au moins une zone de collecte sans passer par ledit moyen de balayage ; cette configuration permet d'améliorer la résolution des images obtenues. Les photons d'émission repassent dans le macrozoom.

Une telle installation est apte en focale courte à confiner efficacement l'énergie par impulsion, temporellement et spatialement, dans un volume focal suffisamment petit pour entraîner l'absorption d'au moins deux photons. Le fait de situer le système optique à grandissement variable entre le moyen de balayage et l'échantillon permet de positionner ledit système optique très près de l'échantillon, et améliore la qualité des images obtenues, même en profondeur.

En outre, étant donné que la source est une source laser impulsionnelle avec une largeur d'impulsion inférieure à la picoseconde, la production impulsionnelle de photons d'excitation s'effectue à des intervalles suffisamment rapprochés pour produire une émission de photons suite à une excitation multi photonique.

Selon d'autres modes de réalisation définis dans les revendications dépendantes :
- lesdits photons d'excitation peuvent être des photons dont la longueur d'onde est dans l'infra-rouge ; en utilisant l'infra-rouge en modalité multi-photon, on obtient une meilleure pénétration, tout en évitant des rayons plus nocifs pour des échantillons biologiques,
- ladite installation peut être configurée pour que lesdits photons d'émission soient des photons de second harmonique, permettant d'améliorer encore la performance de spécificité de détection, de non-invasivité (pas d'introduction d'agents de contraste), et de l'observation en termes de résolution et/ou de profondeur,

- ledit système optique peut être configuré pour permettre à l'installation de produire une image d'un échantillon, avec une distance de travail supérieure à un centimètre, de préférence supérieure à 19 mm ; cette disposition permet de travailler directement sur une partie d'un corps ou partie d'organe in situ, sans prélèvement d'échantillon,
- ledit macrozoom peut comprendre un mécanisme de déplacement suivant l'axe optique d'un ensemble de lentilles configuré pour permettre un grandissement variable d'un facteur de zoom dudit système optique au moins égal à 10, pour donner accès au maximum d'informations microscopiques, et configuré pour réaliser un grandissement dudit système optique allant jusqu'à au moins 500 ; ces dispositions permettent d'obtenir d'excellents résultats de résolution en focale courte, tout en permettant des observations de zones étendues en focale longue,
- ledit système optique peut comprendre des lentilles apochromatiques, permettant d'assurer la correction d'aberrations chromatiques et sphériques ; ce type de lentilles est bien connu de l'homme du métier, et son intégration dans un système optique de l'invention ne présente aucune difficulté particulière,
- ledit moyen de balayage peut être un système de miroirs galvanométriques, permettant d'obtenir une excellente précision de visée, et l'effet d'un zoom digital.

L'invention concerne également une méthode d'imagerie biomédicale selon la revendication 8.

La méthode est particulière en ce que, pour porter les impulsions de photons d'excitation sur la zone choisie, ainsi que pour diriger les photons d'émission, émis par l'échantillon suite aux impulsions de photons d'excitation, vers la zone de collecte, lesdites impulsions de photons d'excitation et lesdits photons d'émission traversent un système optique sous la forme d'un macrozoom à grandissement variable couplé à un objectif, les photons d'émission émis par l'échantillon étant dirigés vers au moins une zone de collecte, sans passer par ledit moyen de balayage. Un tel système optique est apte, en focale courte, à confiner l'énergie temporellement, et spatialement dans un volume focal suffisamment petit pour entraîner l'absorption quasi-simultanément d'au moins deux photons.

En arrivant dans ladite zone de collecte, les photons sont traités selon des procédés connus de l'homme du métier, permettant de rendre visible et/ou exploitable les informations recherchées dans les échantillons.

L'avantage découlant de la présente invention consiste en ce qu'elle permet d'obtenir des images biomédicales avec des résolutions proches de celles obtenues en microscopie, sans nécessiter le prélèvement d'un échantillon, en travaillant directement in situ sur des tissus, une partie d'un organe ou du corps.

Selon un mode de réalisation de l'invention défini dans une des revendications dépendantes, la méthode comprend en outre les étapes suivantes :
- observation macroscopique de l'échantillon par la focale longue du système optique,
- choix d'une zone de l'échantillon à observer plus finement,
- réglage dudit système optique en focale courte,
- observation microscopique de ladite zone.

L'installation d'imagerie biomédicale peut être utilisée, comme défini dans la revendication 10, pour cartographier les molécules de collagène d'un tissu biologique, et/ou de cellulose et/ou d'amidon d'un échantillon végétal, sans marqueur exogène, et de façon non invasive et non destructive.

D'autres caractéristiques et avantages de l'invention ressortiront de la description détaillée qui va suivre se rapportant à un exemple de réalisation donné à titre indicatif et non limitatif.

La compréhension de cette description sera facilitée en se référant aux dessins joints, dans lesquels :
- la figure 1 représente une vue schématique d'une installation selon l'invention ;
- les figures 2 et 3 montrent deux images en mode réflexion (objectif 2x) d'un échantillon de peau humaine pour deux valeurs extrêmes de grandissement (X40 fig. 2, et x230 fig. 3),
- la figure 4 illustre la discrimination des signaux de fluorescence (T2, 2216ps) et de second harmonique (T1, 200ps) sur la base des déclins de signal mesuré sur la peau humaine (excitation multiphotonique à 800nm) au Macroscope en modalité TCSPC (voir définition ci-après),
- la figure 5 montre la composante T1 (200ps) spécifique du signal de second harmonique mesuré à 400 nm sur la peau humaine (excitation multiphotonique à 800nm) au Macroscope en modalité TCSPC,
- la figure 6 montre la composante T2 (200ps) spécifique du signal de fluorescence mesuré entre 450nm et 600 nm sur la peau humaine (excitation multiphotonique à 800nm) au Macroscope en modalité TCSPC,
- la figure 7 illustre des spectres du signal de second harmonique provenant de coupes de peau humaines.

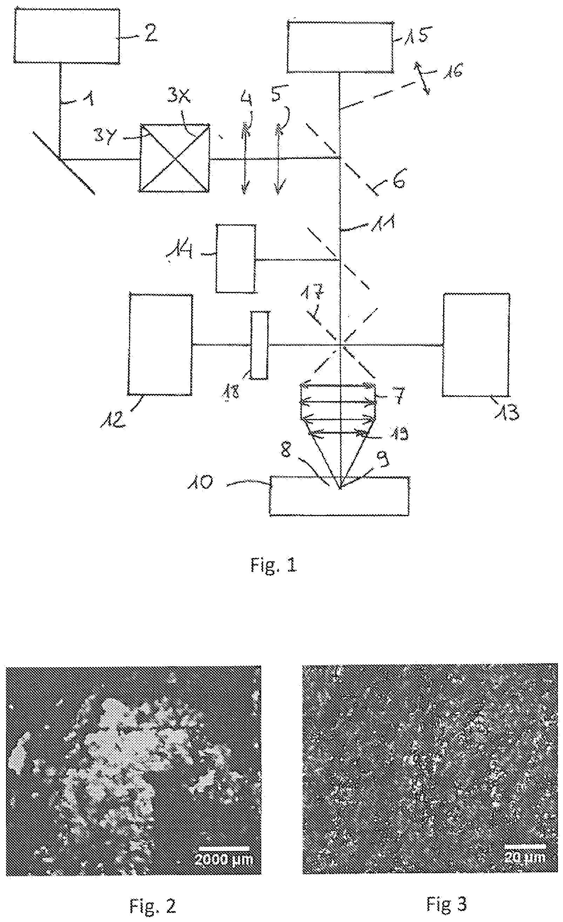

Dans l'installation de la figure 1, la lumière d'excitation 1 est produite par une ou plusieurs raies lasers possibles, issue du banc laser 2. Ce système émet des impulsions photoniques ultracourtes à différentes longueurs d'onde dans l'infra-rouge, avec de préférence une énergie crête suffisante pour entrainer le processus photo physique d'absorption multi photonique, une enveloppe de la largeur d'impulsion étroite (de l'ordre de 100 à 200 fs) et dont la périodicité est définie par la cadence de tir de la source 2 (80 MHz par exemple). Une installation avec absorption multi photonique sera ici appelé un « macro-multiphoton ».

Le faisceau laser 1 est alors orienté vers un ensemble 3 de deux miroirs galvanométriques couplés 3X et 3Y pour le balayage ponctuel dans les directions X et Y, ce qui dirige le faisceau sur un ensemble de deux lentilles convergentes 4 et 5. Via un miroir plat 6 en option, les deux lentilles 4 et 5 conjuguent le plan du miroir galvanométrique 3X ou 3Y avec la distance focale arrière d'un macrozoom 7, couplé à un objectif 19 qui concentre la lumière d'excitation 1 à un point focal donné 8 dans l'échantillon 10. Ce point focal peut être en position axiale 9, c'est à dire sur l'axe optique des lentilles 4,5 et 7 et 19, ou éloigné de l'axe en fonction de la position des miroirs galvanométriques 3.

Le faisceau d'excitation 1, entre 5 et 7, est collimaté, et les photons émis en retour 11 par l'échantillon doivent être également collimatés, ce qui simplifie la conception optique. De ce fait, l'espace libre entre 5 et 7 est assez grand pour la mise en œuvre de ports de détection 12, 13 et 14 pour une meilleure efficacité de détection.

Un macrozoom 7 a été testé avec succès, il s'agit d'un macrozoom commercialisé sous la référence Z16APO A de la marque Leica Microsystems, dont les caractéristiques optiques sont un grandissement pouvant varier entre 4,6 et 53 quand il est couplé à un objectif de grossissement 0,5, et entre 46 et 535 quand il est couplé à un objectif de grossissement 5 (avec 10x pour les oculaires). Le facteur de zoom de ce macrozoom est donc de 53 / 4,6 = 535 / 46 = 11,5.

Ce macrozoom 7, couplé à l'objectif 19, est apte à confiner l'énergie temporellement, et spatialement dans un volume focal suffisamment petit pour entraîner l'absorption quasi-simultanée d'au moins deux photons.

L'échantillon 10 est en général un échantillon épais avec une observation limitée à un seul côté (côté laser incident à l'excitation). Les photons émis par l'échantillon suite à l'excitation par la source 2 reviennent par le même chemin formant le faisceau de retour 11, et repassent dans le macrozoom 7, pour être transmis, selon les dispositions des miroirs 17 et 6 vers les ports de détection 12, 13, ou 14 ou vers un capteur photographique 15, ou vers l'oculaire 16.

On peut aussi utiliser le dispositif en mode transmission, en installant un deuxième macrozoom 7 et objectif 19 sous l'échantillon 10, ainsi qu'un port de détection et un écran de décharge.

Les signaux de l'échantillon 10 résultant du faisceau de retour 11 peuvent être détectés sur le port de détection 12. Cela implique un miroir 17 qui peut être déplacé le long du chemin optique et orienté sur l'axe optique du macrozoom pour diriger la lumière dans une direction vers 12. Ce port de collection peut être équipé pour l'imagerie (camera) ou la spectroscopie (analyse spectrale).

Les photons d'émission (la lumière), émis par l'échantillon, sont réfléchis par le miroir dichroïque 17 et vont d'abord à travers un ensemble "obturateur / filtre modulaire" 18, pour protéger le capteur 12, et pour installer une sorte quelconque de filtre de densité chromatique ou neutre (moitié de la longueur d'onde d'excitation) ou autres moyens dispersifs , nécessaire pour analyser la réponse optique non linéaire de l'échantillon 10 (second harmonique).

La méthode selon l'invention s'applique principalement à des échantillons volumineux qui restent intacts dans leur contexte anatomique, comme une partie (au moins) d'un corps humain ou animal. Elle est particulièrement adaptée à cette application du fait de la grande distance de travail à laquelle on peut obtenir une résolution d'ordre microscopique.

L'imagerie non-linéaire d'un échantillon 10 comprend au moins les étapes mentionnées ci-après.

Dans une première étape, on produit des impulsions 1 de photons synchronisés d'au moins une longueur d'onde choisie dans l'infra-rouge, avec la source 2.

Dans une deuxième étape, les impulsions photoniques sont localement portées sur une première partie d'une zone choisie (région d'intérêt) de l'échantillon 10 pour que ses chromophores intrinsèques absorbent les groupes d'au moins deux photons synchronisés et se désexcitent en émettant des photons en fonction de leur nature respective (plus précisément de leurs transitions d'énergie spécifique) et de la longueur d'onde d'excitation. Il est à noter que le phénomène d'émission de multiples harmoniques ne requiert pas d'absorption au sens photo physique du terme, mais son utilisation fait également partie de la présente invention. Une installation correspondante sera appelée un « macroSHG », pour « Macroscopy Second Harmonie Generation », génération de second harmonique, terme généralement utilisé pour le second, mais aussi pour les multiples harmoniques. Les paramètres de la source 2 à mettre en œuvre pour obtenir une génération de second ou de multiple harmonique sont bien connus de l'homme du métier. L'objet de l'invention est d'appliquer ce principe dans un contexte nouveau.

Dans une troisième étape, les photons émis 11 par l'échantillon 10 (photons d'émission) sont dirigés vers au moins une zone de collecte située en 12, 13, 14 ou 15.

Ces zones de collecte sont équipées selon le cas de différents moyens connus aptes à rendre exploitables ou visibles lors d'étapes complémentaires les observations rendues possibles par l'invention. De telles étapes sont décrites ci-après à titre d'exemple, mais l'homme du métier saura adapter le moyen le plus approprié à chaque type d'observation.

Dans une quatrième étape, les photons d'émission 11 sont détectés, quelle que soit leur énergie, par un détecteur 12, 13, 14, 15 ou 16, par exemple un détecteur de points, avec une grande sensibilité sur la plus vaste région possible du spectre, allant de la région UV au proche infra-rouge (NIR), par exemple autour de 800/2 = 400 nm pour le signal de second harmonique.

Les seuls filtres de l'installation sont ceux utilisés pour rejeter la lumière d'excitation 1 et sélectionner le signal émis en multiples harmoniques. Donc, on réalise une intégration spectroscopique, de la plus grande région accessible du plan (λ, τ), (ou longueur d'onde, instant d'arrivée ou durée de vie), résultant de l'émission chromophore intrinsèque produite par tous les mécanismes possibles photo physiques (radiatif de voies de désexcitation), comme par exemple, l'émission de fluorescence, Raman et diffusion de Rayleigh, ou l'émission de second harmonique.

Cette étape vise à l'imagerie d'échantillonnage spatiale 2D ou 3D d'émissions des photons à l'aide de sa réponse optique non linéaire intrinsèque des molécules concernées dans les systèmes biologiques.

Dans une cinquième étape, le détecteur 12, 13, 14, 15 ou 16 convertit les photons collectés d'abord en un signal physique analogique ou numérique, par exemple une tension ou un courant, puis en des données représentatives au moins de leur nombre. Les données sont ensuite stockées en correspondance avec au moins les impulsions temporelles qui font que les chromophores intrinsèques produisent des photons d'émission corrélés en temps.

On obtient ainsi en un seul balayage un fichier des données stockées représentant l'image de la zone de l'échantillon 10 choisi, avec une résolution submillimétrique, et en fonction des impulsions temporelles et spectrales.

Après avoir appliqué cette méthode avec un faible grandissement, on obtient une image macroscopique d'une zone de plusieurs centimètres d'un échantillon 10, permettant d'avoir une vue d'ensemble. On peut alors sélectionner une partie de cette zone, et « zoomer dessus », c'est-à-dire régler le macrozoom 7 à un grandissement plus fort pour voir en image microscopique un détail de la zone, et cela sans changer d'objectif, et en restant à une distance de travail (distance entre objectif et zone à observer) macroscopique. Les fig. 2 et 3 illustrent une telle démarche sur un échantillon de peau humaine en mode réflexion avec un objectif 2x, entre l'image prise à un grandissement de x2 (fig. 2), et l'image prise à un grandissement de x230 (fig. 3), ce qui donne un facteur de zoom de 230/2 = 115, avec le même objectif, et avec une distance de travail similaire, de l'ordre de 5 cm.

On peut aussi effectuer la première image toujours avec l'objectif 2x, avec le macrozoom 7 réglé pour un grandissement de x20, et l'image de détail avec le même objectif 19 et le macrozoom 7 réglé pour un grandissement de x230, ce qui donne un facteur de zoom de 11,5.

Le réglage des paramètres optiques est bien connu de l'homme du métier, et il n'est pas nécessaire ici de préciser les objectifs à sélectionner pour obtenir un grandissement déterminé, ou une distance de travail déterminé.

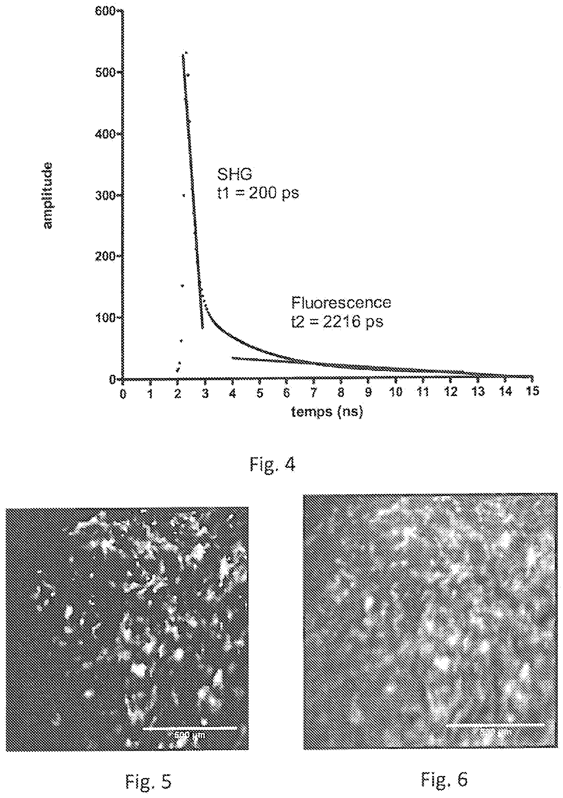

Le détecteur est capable de discriminer les différentes longueurs d'onde λ et/ou instant d'arrivée (ou durée de vie) τ, les données sont également stockées en correspondance avec la longueur d'onde et/ou l'instant d'arrivée. Pour la durée de vie (τ), le mode FLIM (Fluorescence Lifetime Imaging Microscopy, pour microscopie à images selon la durée de vie de la fluorescence) avec la technologie TCSPC (Time correlated Single Photon Counting, pour comptage de photons uniques corrélé en temps) donne accès à la courbe de décroissance d'intensité (voir fig. 4). Elle est caractérisée par deux composantes, une courte attribuée à la génération de second harmonique (T1) et une plus longue attribuée à la fluorescence (T2). Un index a été défini comme le rapport des deux constantes de temps (T2/T1) caractéristique du contenu en collagène et du niveau d'auto fluorescence global. Le principe de l'index (T2/T1) en TCSPC est décrit dans l'article suivant :
(Dumas Dominique, Henrionnet Christel, Hupont Sébastien, Werkmeister Elisabeth, Stoltz Jean-François, Pinzano Astrid, Gillet Pierre. Innovative TCSPC-SHG microscopy imaging to monitor matrix collagen neo-synthesized in bio scaffolds. Biomedical materials and engineering 2010;20(3):183-8.)

Cette modalité TSCPC (carte SPC730, Becker&Hickl Berlin, détecteur PMC100) a été implémentée sur un « macro-multiphoton » pour cartographier à l'aide d'un macrozoom des matériaux collagéniques et discriminer les composantes T1 (signal de second harmonique) et T2 (fluorescence). La composante T1 (200 ps) indique le collagène détecté au niveau d'un échantillon de peau voir fig. 5 et 6. On peut ainsi voir le collagène sans marquage de l'échantillon.

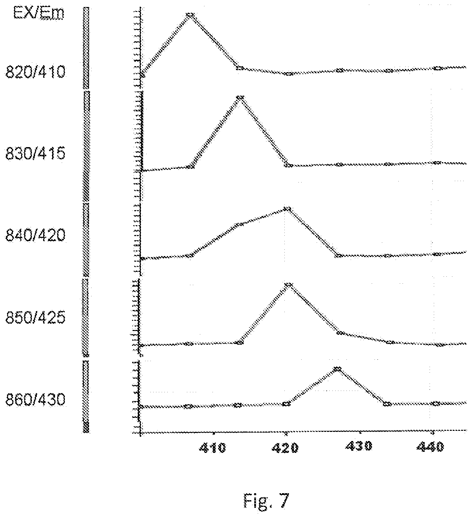

La figure 7 illustre des spectres du signal de second harmonique, obtenus au macroscope, variant de 410 à 430 nm (Em pour émission), provenant de coupes de peau humaines à l'aide d'une excitation multi photonique variant de 820 à 860 nm (EX pour excitation). Elle met bien en évidence la longueur d'onde moitié obtenue en second harmonique (SHG) au niveau d'un échantillon de peau au macroscope (MacroSHG).

## Revendications

1. Installation d'imagerie biomédicale apte à mettre en œuvre une excitation multi photonique d'un échantillon (10) comprenant des chromophores intrinsèques sensibles à l'excitation par des photons d'excitation (1) ayant une énergie choisie pour produire des photons d'émission (11), comprenant :
- au moins une source (2) capable de produire des impulsions de photons d'excitation (1) synchronisés, ladite source (2) étant une source laser impulsionnelle avec une largeur d'impulsion inférieure à la picoseconde,
- un moyen de balayage (3) desdites impulsions de photons d'excitation (1) sur une zone choisie de l'échantillon (10),
- des moyens (7, 19) de mise au point locale desdites impulsions de photons d'excitation (1) sur ledit échantillon (10), et
- des moyens (6, 17) pour diriger les photons d'émission (11) vers au moins une zone de collecte (12, 13, 14, 15, 16),
**caractérisée en ce que** lesdits moyens de mise au point comportent un système optique sous la forme d'un macrozoom (7) à grandissement variable couplé à un objectif (19) situé entre ledit moyen de balayage (3) et ledit échantillon (10), ledit système optique (7) comprend un mécanisme de déplacement suivant l'axe optique d'un ensemble de lentilles configuré pour permettre un grandissement variable dudit système optique d'un facteur de zoom au moins égal à 2 et configuré pour réaliser un grandissement dudit système optique allant jusqu'à au moins 300, lesdits moyens pour diriger les photons d'émission (11) vers au moins une zone de collecte (12, 13, 14, 15, 16) sont configurés pour diriger lesdits photons d'émission (11) vers au moins une zone de collecte (12, 13, 14, 15, 16) sans passer par ledit moyen de balayage (3) et en repassant dans le macrozoom (7) .

2. Installation selon la revendication précédente, dans laquelle lesdits photons d'excitation (1) sont des photons dont la longueur d'onde est dans l'infra-rouge.

3. Installation selon l'une des revendications précédentes, configurée pour que lesdits photons d'émission (11) soient des photons de second harmonique.

4. Installation selon l'une des revendications précédentes dans laquelle ledit système optique (7) est configuré pour permettre à l'installation de produire une image d'un échantillon (10), avec une distance de travail supérieure à un centimètre, de préférence supérieure à 19 mm.

5. Installation selon l'une des revendications précédentes dans laquelle ledit macrozoom (7) comprend un mécanisme de déplacement suivant l'axe optique d'un ensemble de lentilles configuré pour permettre un grandissement variable dudit système optique d'un facteur de zoom au moins égal à 10, et configuré pour réaliser un grandissement dudit système optique allant jusqu'à au moins 500.

6. Installation selon l'une des revendications précédentes, dans laquelle ledit système optique (7) comprend des lentilles apochromatiques.

7. Installation selon l'une des revendications précédentes dans laquelle ledit moyen de balayage (3) est un système de miroirs galvanométriques.

8. Procédé d'imagerie biomédicale d'un échantillon (10) comprenant des chromophores intrinsèques sensibles à l'excitation par des photons d'excitation (1) ayant une énergie choisie pour produire des photons d'émission (11), utilisant une installation selon l'une des revendications précédentes, et comportant les étapes suivantes :
- production d'impulsions de photons d'excitation (1) synchronisés d'au moins une longueur d'onde choisie,
- les impulsions sont localement portées sur une zone choisie de l'échantillon (10) pour que ses chromophores intrinsèques absorbent les groupes d'au moins deux photons d'excitation (1) synchronisés et se désexcitent en émettant des photons d'émission (11),
- les photons d'émission (11) émis par l'échantillon (10) sont dirigés vers au moins une zone de collecte (12, 13, 14, 15, 16),
**caractérisé en ce que**, pour porter les impulsions de photons d'excitation (1) sur la zone choisie, ainsi que pour diriger les photons d'émission (11), émis par l'échantillon (10) suite aux impulsions de photons d'excitation (1), vers la zone de collecte (12, 13, 14, 15, 16), lesdites impulsions de photons d'excitation (1) et lesdits photons d'émission (11) traversent un système optique sous la forme d'un macrozoom (7) à grandissement variable couplé à un objectif (19) et **en ce que** les photons d'émission (11) émis par l'échantillon (10) sont dirigés vers au moins une zone de collecte (12, 13, 14, 15, 16) sans passer par ledit moyen de balayage (3).

9. Procédé d'imagerie biomédicale selon la revendication précédente, comprenant les étapes suivantes :
- observation macroscopique dudit échantillon (10) par la focale longue du système optique (7),
- sélection d'une zone d'intérêt dudit échantillon (10) à observer plus finement,
- réglage dudit système optique (7) en focale courte,
- observation microscopique de ladite zone.

10. Utilisation d'une installation selon l'une des revendications 1 à 7 pour cartographier les molécules de collagène d'un tissu biologique, et/ou de cellulose et/ou d'amidon d'un échantillon végétal, sans marqueur exogène, et de façon non invasive et non destructive.

## Patentansprüche

1. Biomedizinische Bilderzeugungsanlage, die in der Lage ist, eine Multiphotonenanregung einer Probe zu implementieren (10), die intrinsische Chromophore umfasst, die für die Anregung durch Anregungsphotonen (1) empfindlich sind, die eine Energie aufweisen, die ausgewählt ist, um Emissionsphotonen (11) zu erzeugen, umfassend:
- mindestens eine Quelle (2), die in der Lage ist, synchronisierte Anregungsphotonenpulse (1) zu erzeugen, wobei die besagte Quelle (2) eine gepulste Laserquelle mit einer Pulsbreite von weniger als der Pikosekunde ist,
- ein Mittel zum Abtasten (3) der besagten Anregungsphotonenpulse (1) auf einem ausgewählten Bereich der Probe (10),
- Mittel (7, 19) zum lokalen Fokussieren der Anregungsphotonenimpulse (1) auf der Probe (10), und
- Mittel (6, 17) zum Leitten der Emissionsphotonen (11) zu mindestens einem Sammelbereich (12, 13, 14, 15, 16),
**dadurch gekennzeichnet, dass** die besagten Fokussiermittel ein optisches System in Form eines Makrozooms (7) mit variabler Vergrößerung umfasst, das mit einem Objektiv (19) gekoppelt ist, das sich zwischen dem besagten Abtastmittel (3) und der besagten Probe (10) befindet, wobei das besagte optische System (7) einen Mechanismus zum Bewegen entlang der optischen Achse eines Linsensatzes umfasst, der konfiguriert ist, um eine variable Vergrößerung des besagten optischen Systems um einen Zoomfaktor mindestens gleich 2 zu erlauben, und konfiguriert ist, um eine Vergrößerung des besagten optischen Systems bis zu mindestens 300 zu verwirklichen, wobei die besagten Mittel zum Leiten der Emissionsphotonen (11) zu mindestens einem Sammelbereich (12, 13, 14, 15, 16) konfiguriert sind, um die besagten Emissionsphotonen (11) zu mindestens einem Sammelbereich (12, 13, 14, 15, 16) zu leiten, ohne durch das besagte Abtastmittel (3) zu laufen und wobei in den Makrozoom (7) zurückgekehrt wird.

2. Anlage nach dem vorhergehenden Anspruch, bei der die besagten Anregungsphotonen (1) Photonen sind, deren Wellenlänge im Infraroten liegt.

3. Anlage nach einem der vorhergehenden Ansprüche, die so konfiguriert ist, dass die Emissionsphotonen (11) Photonen der zweiten Harmonischen sind.

4. Anlage nach einem der vorhergehenden Ansprüche, bei der das besagte optische System (7) konfiguriert ist, um es der Anlage zu erlauben, ein Bild einer Probe (10) mit einem Arbeitsabstand von mehr als einem Zentimeter, vorzugsweise von mehr als 19 mm, zu erzeugen.

5. Anlage nach einem der vorhergehenden Ansprüche, bei der das Makrozoom (7) einen Mechanismus zum Bewegen entlang der optischen Achse eines Linsensatzes umfasst, der konfiguriert ist, um eine variable Vergrößerung des besagten optischen Systems um einen Zoomfaktor von mindestens 10 zu erlauben, und konfiguriert, um eine Vergrößerung des besagten optischen Systems bis zu mindestens 500 zu verwirklichen.

6. Anlage nach einem der vorhergehenden Ansprüche, bei der das besagte optische System (7) apochromatische Linsen umfasst.

7. Anlage nach einem der vorhergehenden Ansprüche, bei der das besagte Abtastmittel (3) ein System von galvanometrischen Spiegeln ist.

8. Verfahren zur biomedizinischen Bilderzeugung einer Probe (10), die intrinsische Chromophore umfasst, die für die Anregung durch Anregungsphotonen (1) erfindlich sind, die eine Energie aufweisen, die ausgewählt ist, um Emissionsphotonen (11) zu erzeugen, unter Verwendung einer Anlage nach einem der vorhergehenden Ansprüche, und umfassend folgende Schritte:
- Erzeugen von synchronisierten Anregungsphotonenpulsen (1) mit mindestens einer gewählten Wellenlänge,
- die Pulse werden lokal auf einem ausgewählten Bereich der Probe (10) getragen, damit dessen intrinsische Chromophore die Gruppen von mindestens zwei synchronisierten Anregungsphotonen (1) absorbieren und durch Emission der Emissionsphotonen (11) entregt werden,
- die von der Probe (10) emittierte Emissionsphotonen (11) werden zu mindestens einem Sammelbereich (12, 13, 14, 15, 16) geleitet,
**dadurch gekennzeichnet, dass** die besagten Anregungsphotonenpulse (1) und die besagten Emissionsphotonen (11), um die Anregungsphotonenpulse (1) auf dem ausgewählten Bereich zu tragen, sowie um die zufolge der Anregungsphotonenpulse (1) von der Probe (10) emittierten Emissionsphotonen (11) zum Sammelbereich (12, 13, 14, 15, 16) zu leiten, durch ein optisches System in Form eines Makrozooms (7) mit variabler Vergrößerung laufen, das mit einem Objektiv (19) gekoppelt ist, und dass die von der Probe (10) emittierten Emissionsphotonen (11) zu mindestens einem Sammelbereich (12, 13, 14, 15, 16) geleitet werden, ohne das sie durch das besagte Abtastmittel (3) laufen.

9. Verfahren zur biomedizinischen Bilderzeugung nach dem vorhergehenden Anspruch, umfassend folgende Schritte:
- makroskopische Beobachtung der besagten Probe (10) mit der langen Brennweite des optischen Systems (7),
- Auswahl eines genauer zu beobachtenden, gewünschten Bereichs der Probe (10),
- Einstellung des optischen Systems (7) mit kurzer Brennweite,
- mikroskopische Beobachtung des besagten Bereichs.

10. Verwendung einer Anlage nach einem der Ansprüche 1 bis 7 zum Kartographieren der Kollagenmoleküle eines biologischen Gewebes und/oder von Cellulose und/oder von Stärke einer Pflanzenprobe, ohne exogenen Marker, und auf nicht-invasive und zerstörungsfreie Weise.

## Claims

1. Biomedical imaging installation capable of implementing a multi-photon excitation of a sample (10) comprising intrinsic chromophores sensitive to the excitation by excitation photons (1) having an energy chosen so as to produce emission photons (11), comprising:
- at least one source (2) capable of producing synchronized excitation photon pulses (1), said source (2) being a pulsed laser source with a pulse width of less than the picosecond,
- a means for scanning (3) said excitation photon pulses (1) on a chosen area of the sample (10),
- means (7, 19) for local development of said excitation photon pulses (1) on said sample (10), and
- means (6, 17) for directing the emission photons (11) to at least one collection area (12, 13, 14, 15, 16),
wherein said development means include an optical system in the form of a variable magnification macro-zoom (7) coupled to an objective (19) located between said scanning means (3) and said sample (10), said optical system (7) comprises a mechanism for moving along the optical axis of a set of lenses configured to permit a variable magnification of said optical system by a zoom factor of at least 2 and configured to perform a magnification of said optical system of up to at least 300, said means for directing the emission photons (11) to at least one collection area (12, 13, 14, 15, 16) are configured to direct said emission photons (11) to at least one collection zone (12, 13, 14, 15, 16) without passing through said scanning means (3) and going back into the macro-zoom (7).

2. Installation according to the preceding claim, wherein said excitation photons (1) are photons, the wavelength of which is in the infrared.

3. Installation according to one of the preceding claims, configured so that said emission photons (11) are second harmonic photons.

4. Installation according to one of the preceding claims, wherein said optical system (7) is configured to permit the installation to produce an image of a sample (10), with a working distance larger than one centimeter, preferably larger than 19 mm.

5. Installation according to one of the preceding claims, wherein said macro-zoom (7) comprises a mechanism for moving along the optical axis of a set of lenses configured to permit a variable magnification of said optical system by a zoom factor at least equal to 10, and configured to perform a magnification of said optical system of up to at least 500.

6. Installation according to one of the preceding claims, wherein said optical system (7) comprises apochromatic lenses.

7. Installation according to one of the preceding claims, wherein said scanning means (3) is a system of galvanometric mirrors.

8. Method of biomedical imaging of a sample (10) comprising intrinsic chromophores sensitive to the excitation by excitation photons (1) having an energy chosen so as to produce emission photons (11), using an installation according to one of the preceding claims, and including the following steps:
- producing synchronized excitation photon pulses (1) of at least one chosen wavelength,
- the pulses are carried locally to a chosen area of the sample (10) so that its intrinsic chromophores absorb the groups of at least two synchronized excitation photons (1) and de-excite by emitting emission photons (11),
- the emission photons (11) emitted by the sample (10) are directed to at least one collection area (12, 13, 14, 15, 16),
wherein, in order to carry the excitation photon pulses (1) to the chosen area, as well as to direct the emission photons (11) emitted by the sample (10) as a result of the excitation photon pulses (1) to the collection area (12, 13, 14, 15, 16), said excitation photon pulses (1) and said emission photons (11) pass through an optical system in the form of a variable magnification macro-zoom (7) coupled to an objective (19) and the emission photons (11) emitted by the sample (10) are directed to at least one collection area (12, 13, 14, 15, 16) without passing through said scanning means (3).

9. Biomedical imaging method according to the preceding claim, comprising the following steps:
- macroscopically observing said sample (10) with the long focal length of the optical system (7),
- selecting an area of interest of said sample (10) to be observed in greater detail,
- adjusting said optical system (7) in short focal length,
- microscopically observing said area.

10. Use of an installation according to one of claims 1 to 7 for mapping the collagen molecules of a biological tissue, and/or cellulose and/or starch of a plant sample, without exogenous marker, and in a non-invasive and non-destructive way.
